## Europäisches Patentamt
## European Patent Office
## Office européen des brevets

(19)

(11) Numéro de publication: **0 040 349**
**B1**

(12) ## FASCICULE DE BREVET EUROPEEN

(45) Date de publication du fascicule du brevet:
**17.08.83**

(51) Int. Cl.³: **A 23 G 3/02,** A 23 G 3/20,
A 23 G 9/24, A 23 G 3/28

(21) Numéro de dépôt: **81103345.5**

(22) Date de dépôt: **04.05.81**

(54) **Tête de nappage et de décoration d'articles de pâtisserie ou de dessert.**

(30) Priorité: **19.05.80 FR 8011125**

(43) Date de publication de la demande:
**25.11.81 Bulletin 81/47**

(45) Mention de la délivrance du brevet:
**17.08.83 Bulletin 83/33**

(84) Etats contractants désignés:
**CH DE GB IT LI SE**

(56) Documents cités:
**FR-A-1 388 234**
**US-A-2 553 191**
**US-A-3 547 052**

(73) Titulaire: **SOCIETE DES PRODUITS NESTLE S.A., Case postale 353, CH-1800 Vevey (CH)**

(72) Inventeur: **Launay, Noel, 15, rue Bossuet, F-60000 Beauvais (FR)**

## Tête de nappage et de décoration d'articles de pâtisserie ou de dessert

La présente invention concerne une tête de distribution d'un produit alimentaire d'un type aéré semifluide, tel que de la pâte meringuée, sur un article de pâtisserie ou de dessert et de décoration au moyen de ce produit de l'article qui en a été ainsi nappé et revêtu et applicable notamment à la confection d'omelettes norvégiennes de forme parallélépipédique rectangulaire.

Il existe déjà, on le sait, des appareils de différents formes permettant le garnissage, de manière autre que manuelle, le plus souvent mécanique, d'articles d'alimentation de formes ronde ou cylindrique au moyen de produits semi-fluides. C'est ainsi, par exemple, qu'il existe, concernant en particulier les pizzas fabriquées industriellement de nombreux dispositifs de garnissage automatique de leur face supérieure et de dosage du volume de garniture, laquelle garniture peut être constituée par exemple par des sauces, pâtes ou farces de consistances diverses. Tous ces dispositifs, s'ils remplissent généralement de manière satisfaisante l'office pour lequel ils ont été conçus, restent toutefois limités, d'une part aux produits de forme circulaire et, d'autre part, à la garniture, au revêtement ou à la décoration de leur seule face supérieure. Dans le cas plus particulier de revêtement et de décoration d'articles de pâtisserie ou d'articles similaires tels que les crèmes glacées, on connaît des têtes de nappage permettant d'appliquer le produit de décoration, soit sur la face latérale seule de gâteux ou d'articles similaires cylindriques, soit simultanément sur la face latérale d'un tel article et sur la face transversale supérieure de celui-ci. A cet effet, la tête de distribution est, selon le cas, ou bien constituée par une buse fixe munie d'une fente verticale d'expulsion du produit de décoration sur la face latérale du gâteau cylindrique entraîné en rotation autour de son axe, ladite face latérale défilant ainsi en regard de la fente par laquelle est extrudé le produit de revêtement et de décoration, ou bien constituée par un ensemble comportant de préférence une tête de distribution pour le revêtement et/ou la décoration de la face supérieure d'un article de forme cylindrique associée à une tête auxiliaire comportant au moins un ajutage horizontal par lequel le produit de décoration est extrudé sur le flanc dudit article, les deux têtes pouvant être commandées de manière que les buses dont elles sont munies, soit extrudent le produit simultanément sur la face supérieure et sur les flancs, soit l'extrudent indépendamment l'une de l'autre. Là encore, les appareils existants, s'ils permettent le revêtement et/ou la décoration de la face supérieure aussi bien que de la face latérale d'une pièce de pâtisserie, ne permettent l'obtention de ce résultat que pour des pièces ou articles de forme de révolution en particulier cylindrique à l'exclusion des pièces ayant une autre forme géométrique.

Par exemple, le brevet US-A-2 553 191 a trait à un dispositif réalisant un décor lisse sur les surfaces supérieure et latérale d'un gâteau cylindrique avec un produit de nappage au moyen d'un plateau rotatif portant le gâteau qui tourne devant deux buses en forme de fentes, l'une verticale pour le nappage de la surface latérale et l'autre horizontale pour le nappage de la surface supérieure, le produit étant ensuite égalisé par des racloirs. Ce dispositif ne permet de traiter que des produits cylindriques et ne décore pas les surfaces. De plus, l'utilisation de racloirs n'est pas compatible avec les problèmes bactériologiques rencontrés dans le travail des crèmes glacées.

Le brevet FR-A-1 338 234 concerne un dispositif réalisant la décoration de la surface supérieure de gâteaux avec un produit très foisonné.

Dans les dispositifs connus, la décoration de la surface supérieure et de la surface latérale de gâteaux de forme parallélépipédique s'effectue en deux opérations différentes, voire inconciliables; en effet, la réalisation du décor de la surface supérieure nécessite l'immobilité du système de dosage durant l'extrusion du produit de décor par des buses crantées réalisant ce dernier.

Par contre, le décor latéral est réalisé par des douilles d'extrusion ayant un mouvement vertical pendant l'éjection du produit de décor (décor vertical) ou dans le cas de gâteaux cylindriques seulement, par des douilles d'extrusion et une rotation du gâteau à décorer pendant l'extrusion du produit de décor (décor circulaire).

Certaines pièces de pâtisseries, gâteaux ou autres, sont traditionnellement de forme parallélépipédique, comme c'est le cas notamment des articles dénommés »omelettes norvégiennes« qui affectent la forme générale d'un parallélépipède rectangle ou d'une forme très voisine de celle-ci. Il est clair qu'aucun appareil du type de ceux actuellement connus ne se trouve en mesure d'être appliqué aux articles et produits de cette forme.

La présente invention obvie aux inconvénients précités en fournissant une tête de nappage et de décoration simultanés au moyen d'un produit aéré ayant une consistance semi-fluide de la face supérieure et des faces latérales d'un article de pâtisserie de forme parallélépipédique dont la face supérieure a un contour essentiellement rectangulaire et dont les sections latérales sont essentiellement trapézoïdales et placé sur un plateau formant support, permettant notamment de revêtir de pâte meringuée les faces du noyau de forme parallélépipédique de crème glacée entrant dans la constitution d'une omelette norvégienne. Il permet un décor vertical de la face latérale du gâteau par un mouvement vertical après la fin d'extrusion du produit de décor et réalise simultanément le décor de la surface supérieure.

La tête de nappage et de décoration selon l'invention est caractérisée par le fait qu'elle comporte une enceinte d'emmagasinement dudit produit dont le fond épouse le contour de la face supérieure de l'article et qui présente un orifice par l'intermédiaire duquel elle est reliée à un dispositif de dosage, lui-même relié à une source d'approvisionnement en produit, que ledit fond est muni de deux ensembles de buses verticales d'évacuation simultanée dudit produit et disposées de manière à coiffer entièrement l'article, que les buses du premier ensemble ou buses de décor supérieur sont réparties régulièrement sur toute la surface du fond et présentent un orifice inférieur de sortie cranté, que les buses du second ensemble ou buses de décor latéral, plus longues que celles du premier, sont disposées régulièrement le long de la périphérie du fond et présentent un orifice latéral orienté vers l'intérieur parallèlement au contour du fond, à l'exception des buses placées aux sommets du rectangle et dont l'orifice latéral est dans un plan perpendiculaire au plan de symétrie des deux côtés dont il forme l'intersection et que ladite tête de nappage et le support de l'article sont mobiles en translation verticale l'un par rapport à l'autre en fin d'extrusion du produit.

On comprendra aisément que les buses doivent coiffer entièrement l'article. Ainsi, la différence de niveau entre les orifices inférieurs de chacune des buses du premier ensemble et de chacune des buses du second doit être au moins égale à la hauteur de l'article à recouvrir avant son recouvrement. De plus, les buses périphériques du second ensemble doivent être disposées de façon telle que deux buses se faisant face soient écartées entre elles d'une distance au moins égale à la distance séparant les deux faces correspondantes de l'article une fois recouvert.

De manière préférée, la tête de nappage et de décoration selon l'invention est maintenue fixe, tandis que le support de l'article à revêtir est mobile en translation verticale descendante en fin d'extrusion du produit de recouvrement sur les faces supérieure et latérales dudit article.

De manière particulièrement avantageuse, les buses périphériques possèdent une ouverture latérale de sortie biseautée en forme de sifflet.

En vue de permettre une décoration de forme côtelée des faces latérales de l'article à napper, les ouvertures latérales de sortie biseautée de deux buses successives ont des dimensions différentes.

Dans la suite de l'exposé, on fera référence à un article de forme parallélépipédique. Il est certain que les deux ensembles de buses de la tête selon l'invention peuvent être agencés de manière à coiffer un article de forme géométrique simple dont la face supérieure est plane et présente un contour essentiellement rectangulaire tandis que ses faces latérales définissent une surface adjacente à la face supérieure.

Les caractéristiques et avantages de la présente invention ressortiront mieux de la description faite ci-après à titre d'exemple non limitatif, en regard des dessins annexés sur lesquels:

— la figure 1 représente une coupe longitudinale selon I-I de la figure 2 de la tête de distribution,

— la figure 2 représente une coupe latérale selon II-II de la tête de la figure 1,

— la figure 3 représente une vue de dessous de la tête de la figure 1; et

— les figures 4a et 4b représentent respectivement une coupe longitudinale et une coupe transversale d'une omelette norvégienne qui en montrent la structure.

Sur ces différentes figures les mêmes références représentent les mêmes éléments.

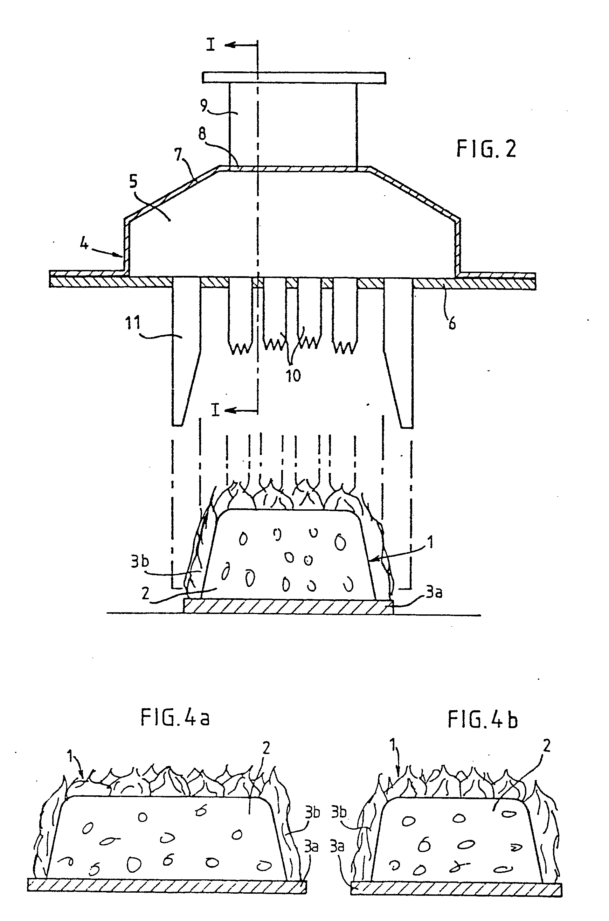

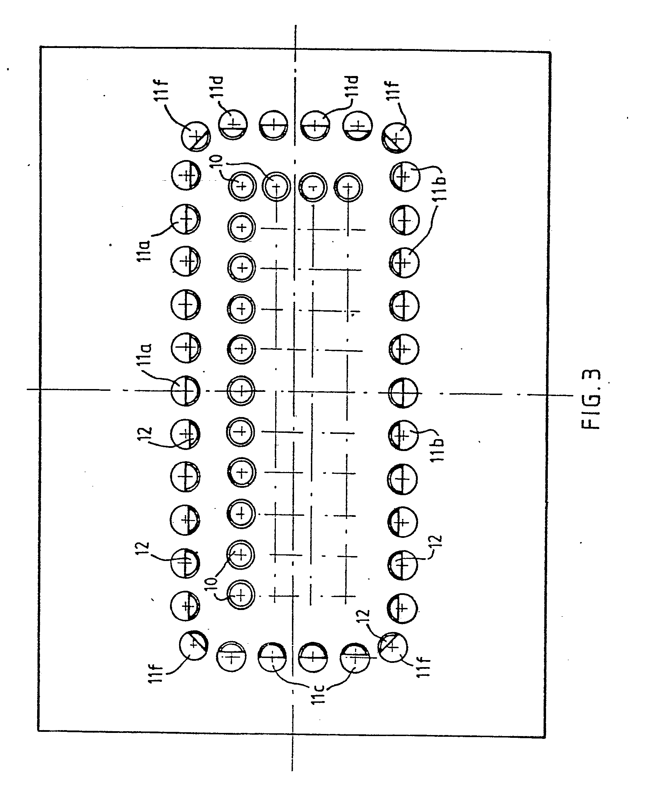

En se référant tout d'abord aux figures 4a et 4b: une omelette norvégienne 1 est essentiellement constituée par un noyau de crème glacée 2 reposant sur une plaque rectangulaire 3a composée d'une pâte formant isolant thermique, en général du type génoise. Le noyau de crème glacée, de forme générale parallélépipédique, présente des faces latérales sensiblement verticales, mais pouvant également être inclinées légèrement par rapport à la verticale, et dont les bords ou arêtes inférieures forment un rectangle concentrique à la plaque isolante rectangulaire 3a et intérieur à ce dernier, ce noyau de crème glacée laissant ainsi subsister une bordure rectangulaire de pâte génoise tout autour de sa base. L'ensemble ainsi constitué est, comme on le sait, alors revêtu sur les faces latérales et supérieures du noyau de crème glacée en même temps que sur la bordure rectangulaire de sa plaque support de pâte génoise d'une couche 3b de pâte meringuée à base de blanc d'oeufs battus avec du sucre portant des décorations en creux et en relief à sa superficie. Cette couche de pâte meringuée constitue un isolant thermique, permettant de chauffer pendant un laps de temps de valeur prédéterminée l'ensemble ainsi revêtu et décoré dans un four où la pâte meringuée se retrouve marbrée de dorures provoquées par la chaleur le long des parties saillantes des décorations en relief.

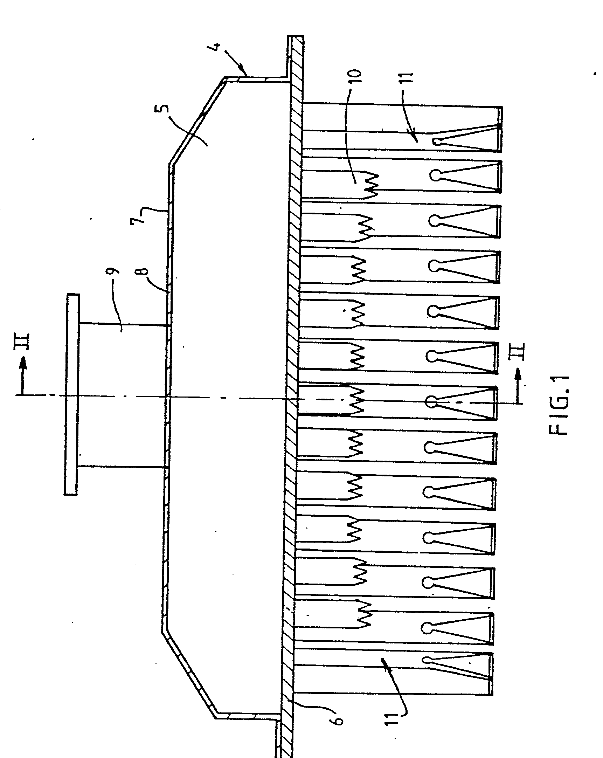

En se référant plus particulièrement aux figures 1, 2 et 3, la tête ou plaque 4 comporte une enceinte d'emmagasinage 5 dont le fond ou base est formé par une plaque 6 horizontale métallique, de forme rectangulaire, et qui comporte sur sa face supérieure 7 formant couvercle, un orifice 8 obturable mettant ledit réservoir 5 en communication par l'intermédiaire d'une canalisation appropriée 9 avec un dispositif de dosage non représenté de la pâte meringuée admise dans l'enceinte et relié à une source d'approvisionnement en pâte meringuée (non représentée) et de mise en pression de cette dernière. La plaque rectangulaire 6 formant le fond du réservoir d'emmagasinement de la pâte meringuée constitue également le support de deux ensembles de buses d'éjection de ladite pâte hors du réservoir. Le premier de ces ensembles de buses comporte des buses verticales 10 régulièrement disposées, le long de rangées et de files parallèles dont chacune comporte le même nombre d'éléments, les centres des orifices d'entrée des buses des rangées d'extrémités étant disposés et régulièrement espacés le long des côtés d'un rectangle concentrique au rectangle formant le contour de la plaque de base du réservoir. Ainsi, comme représenté sur la figure 3, cet ensemble peut par exemple comporter quatre rangées d'éléments disposés sur onze files. Chacune de ces buses a pour origine un orifice ménagé dans la plaque de base 6 et est formée par un élément tubulaire d'axe vertical, débouchant par un orifice d'extrémité inférieure cranté en dessous de ladite plaque 6, et au-dessus du noyau de crème glacée comme ci-après indiqué, cet orifice pouvant avoir toute forme appropriée à l'obtention d'un filet de pâte meringuée ayant une section choisie en fonction des caractéristiques de la décoration désirée. Le plus souvent la forme de cet orifice d'extrémité est celle de l'extrémité des douilles décoreuses de pâtissier ou domestiques. Le second ensemble buses 11 est comme représenté sur la figure 3 disposé à l'extérieur des buses du premier ensemble, ses buses étant disposées en lignes à raison, d'une part de deux lignes formées respectivement des buses 11a et 11b parallèles aux rangées de buses du premier ensemble placées de part et d'autre des buses extérieures correspondantes de celui-ci, et, d'autre part, de deux lignes 11c et 11d parallèles aux files de buses dudit premier ensemble et placées de part et d'autre des buses extérieures correspondantes de celui-ci. Ce second ensemble comporte, en plus, quatre buses de sommets 11f, dont chacune constitue la buse de transition entre deux lignes adjacentes mais d'orientations différentes. Comme dans le cas des buses du premier ensemble, chacune de ces buses, qui a pour origine un orifice ménagé dans la plaque de base 6, est formée par un élément tubulaire d'axe vertical débouchant par un orifice latéral, en dessous de ladite plaque 6 et en dessous des orifices d'extrémité inférieure des buses du premier ensemble, les centres des orifices d'entrée desdites buses latérales étant disposés sur le contour d'un rectangle semblable et concentrique au rectangle sur le contour duquel se trouvent des centres des buses périphériques du premier ensemble de buses. L'orifice latéral de sortie d'extrémité inférieure de chacune des buses du second ensemble présente, selon l'invention, une forme dite en sifflet, et obtenue par tronquage de l'extrémité de ladite buse cylindrique par un plan incliné sur son axe longitudinal et recoupant le plan du cercle formant le contour d'extrémité du fond du cylindre le long d'une de ses cordes. La section de l'ouverture latérale ainsi réalisée peut ainsi être choisie de manière à être adaptée à la plus ou moins grande fluidité du produit de nappage extrudé. En particulier la hauteur et la largeur de cette section elliptique peuvent être choisies à volonté.

Chacune des buses latérales ainsi munie d'un orifice d'extrusion en forme de sifflet est disposée de manière qu'il soit tourné vers l'intérieur, c'est-à-dire du côté du noyau de crème glacée à napper de pâte meringuée. Les buses qui n'appartiennent pas à l'ensemble des quatre buses de sommet 11f sont disposées de manière que les orifices d'extrusion des buses de chacune des deux lignes de onze buses 11a et 11b parallèles aux rangées de onze buses 10 aient un plan de symétrie lingitudinale vertical parallèle aux plans contenant les axes des buses des différentes files de buses du premier ensemble; de même, les quatre buses de chacune des deux lignes 11c et 11d parallèles aux onze files de buses du premier ensemble sont disposés de manière que l'orifice d'extrusion de chacune d'ellesait un plan de symétrie longitudinale vertical parallèle aux plans contenant les axes des buses des différentes rangées de buses du premier ensemble, comme représenté en particulier sur la figure 3. Les quatre buses de sommets 11f ont elles aussi leurs orifices d'extrusion 12 respectifs tournés vers l'intérieur du rectangle, délimité par l'ensemble des buses latérales, mais chacun de ces orifices est disposé de manière que son plan de symétrie longitudinale vertical soit incliné à 45° par rapport aux plans de symétrie des orifices d'extrusion de chacune des deux buses qui lui sont adjacentes et qu'à son tour, il constitue un plan de symétrie de l'ensemble de ces deux plans.

Alors que les extrémités inférieures des buses du second ensemble, c'est-à-dire des buses périphériques, sont placées au même niveau, les buses de cet ensemble étant à cet effet toutes de même longueur, les extrémités inférieures des buses du premier ensemble peuvent être placées au même niveau ou à des niveaux différents. Dans ce dernier cas qui est préféré, et comme représenté sur la figure 1, les buses les plus longues, c'est-à-dire dont le niveau de l'extrémité inférieure est placé le plus bas se trouvent du côté de la périphérie de ce premier ensemble de buses, tandis que les buses les plus centrales sont les plus courtes et que, par suite, le niveau de leurs extrémités inférieures est placé plus haut.

Comme représenté sur la figure 1, les buses d'une même rangée, sont de plus en plus longues au fur et à mesure que l'on s'éloigne de la partie centrale de cette rangée en direction de la périphérie. De même, dans une même file, les buses les plus longues se trouvent placées à la périphérie. Une telle disposition permet de donner au revêtement du noyau de crème glacée une forme galbée.

Afin de permettre un nappage correct de la face supérieure et des faces latérales du noyau de crème glacée, c'est-à-dire un recouvrement de ces différents faces par une même épaisseur ou une épaisseur homogène de produit de nappage, la différence de niveau séparant la partie inférieure des buses supérieures les plus basses de celle des buses périphériques est au moins égale à la hauteur du noyau de crème glacée tandis que la distance séparant deux lignes de buses périphériques parallèles est égale à environ la dimension correspondante, c'est-à-dire longueur ou largeur, du noyau de crème glacée augmentée de deux fois l'épaisseur de la couche de produit de nappage mise en place une fois ce nappage terminé.

L'enceinte d'emmagasinage du produit de nappage est, de manière connue, alimentée en produit par un dispositif de dosage de tout type connu approprié, lequel introduit sur commande une quantité de valeur prédéterminée en poids ou en volume dans ladite enceinte, cette quantité étant la quantité nécessaire pour le nappage d'un noyau de crème glacée ou de tout autre article de même forme.

L'opération de nappage du noyau de crème glacée au moyen de la tête de nappage ci-dessus décrite est réalisée, une fois ledit noyau amené par tout moyen connu approprié à l'aplomb de ladite tête, en provoquant un mouvement relatif de translation verticale de cette tête par rapport au noyau placé sur son support. A cet effet, il existe deux possibilités, ou bien la tête de nappage reste fixe et le support du noyau de crème glacée est entraîné en translation verticale descendante sur une hauteur de valeur prédéterminée, ou bien le support du noyau de crème glacée reste fixe et la tête de nappage est entraînée en translation ascendante sur la même hauteur que dans le cas précédent.

Ainsi, selon une forme de réalisation préférée de l'invention le noyau rectangulaire de crème glacée reposant sur sa plaque isolante de pâte génoise est amené par tout moyen approprié de type connu tel que poussoir ou bande transporteuse sur un plateau de réception, disposé à l'aplomb de la tête de nappage maintenue fixe. Le rectangle correspondant est concentrique au rectangle de ladite tête de nappage et de dimensions telles que ses bords soient disposés le long du contour apparent intérieur des lignes de buses latérales. Lorsque le noyau de crème glacée a été mis en place sur son support, celui-ci est déplacé par tout moyen approprié et connu en soi, en translation verticale ascendante jusqu'à ce que la face inférieure du noyau de crème glacée vienne se placer à une certaine distance, fonction du décor désiré, de l'extrémité inférieure des buses latérales de la tête de nappage, tandis que sa face supérieure vient se placer en dessous des buses supérieures de ladite tête. Arrivé dans cette position, le support y est immobilisé automatiquement, la commande d'arrêt du mouvement étant obtenue de manière connue. La mise à l'arrêt automatique du support du noyau de crème glacée, provoque par un moyen de commande classique la mise en marche du dispositif doseur, le passage d'une quantité de valeur prédéterminée de pâte meringuée dans l'enceinte de réception 5 du produit et l'extrusion de celui-ci à travers les buses 10 et 11 ménagées sur le fond rectangulaire 6 de ladite enceinte. La position des buses pendant l'extrusion est figurée en traits mixtes sur la figure 2. En fin d'extrusion, après un temps réglable, la descente du plateau portant le produit provoque la formation du décor puis la séparation de celui-ci des buses d'extrusion. Celles-ci ont la position indiquée en traits pleins par rapport au plateau en fin de course de celui-ci, également sur la figure 2.

Il est clair que l'obtention d'une épaisseur de nappage sensiblement homogène, dépend de plusieurs éléments et notamment du volume de produit emmagasiné dans l'enceinte, du nombre et de la disposition des buses, de l'ouverture de leurs orifices de sortie et de la viscosité du produit de nappage. Tous ces éléments sont réglés expérimentalement en fonction du résultat recherché.

La forme des orifices inférieurs de sortie du produit de nappage des buses supérieures, si elle est généralement la même pour toutes les buses d'une même tête, peut également être choisie différente pour certaines d'entre elles, en vue d'obtenir des effets décoratifs particuliers. De même, en vue d'obtenir sur le revêtement des faces latérales du noyau de crème glacée une décoration leur conférant un aspect côtelé, on peut donner aux orifices en forme de sifflet des buses périphériques des dimensions changeant de l'une à l'autre, comme représenté par exemple sur la figure 3. Dans l'exemple représenté, sur une rangée, deux buses successives présentent des orifices de dimensions différentes, ces orifices restant toutefois les mêmes toutes les deux buses. Une buse sur deux présente un orifice résultant de la section de l'extrémité inférieure par un plan oblique passant par un diamètre du fond circulaire du tube cylindrique à partir duquel elle est constituée, tandis qu'une buse sur deux présente un orifice résultant de la section de son extrémité inférieure par un plan oblique passant par une corde du fond circulaire du tube cylindrique correspondant, section à laquelle correspond une ouverture d'orifice plus faible. La quantité de produit de nappage déversée par les buses aux orifices de plus grandes dimensions étant plus élevée que celle déversée par les buses voisines aux orifices de plus faible dimension, il en résulte la formation de côtelages sur les faces latérales du noyau de crème glacée, les côtes correspondantes étant disposées selon des plans verticaux et formant alors une décoration desdites faces.

Ainsi que ci-dessus mentionné, la tête de nappage telle qu'elle vient d'être décrite fait partie d'un ensemble entièrement automatisé, par tous moyens mécaniques et/ou électromagnétiques, électroniques de tous types connus appropriés, et dans lequel, les noyaux de crème glacée supportés par la plaque de pâtisserie isolante sont amenés préfabriqués sur le plateau qui, à l'aplomb de la tête de nappage, en forme le support et est amené à l'intérieur de l'enceinte rectangulaire formée par les lignes de buses périphériques pour être ensuite abaissé en translation verticale pendant que les buses déversent le produit de nappage.

Une telle tête de nappage permet ainsi de mécaniser et d'automatiser un ensemble d'opérations qui, en ce qui concerne les pièces ou articles, notamment de pâtisserie de forme parallélépipédiques ne pouvaient jusqu'alors être faites tout au moins en partie que manuellement, et qui ne pouvaient être effectuées entièrement mécaniquement et/ou automatiquement que dans le cas d'articles de forme circulaire, c'est-à-dire cylindriques, coniques ou tronconiques.

L'invention a été décrite ci-dessus, par référence à la préparation d'une omelette norvégienne et plus particulièrement de la phase de cette préparation qui consiste à revêtir le noyau de crème glacée de pâte meringuée. Elle peut, bien entendu, être appliquée à tout article ou produit, notamment de pâtisserie, de forme parallélépipédique destiné à être revêtu et/ou nappé d'un produit aéré de consistance semi-fluide, comme par exemple de crème dite »Chantilly« ou tout autre produit analogue.

**Revendications**

1. Tête de nappage et de décoration simultanés, au moyen d'un produit aéré de consistance semi-fluide, de la face supérieure et des faces latérales d'un article de pâtisserie de forme parallélépipédique dont la face supérieure a un contour essentiellement rectangulaire et dont les sections latérales sont essentiellement trapézoïdales et placé sur un plateau formant support, caractérisée par le fait qu'elle comporte une enceinte d'emmagasinement dudit produit dont le fond épouse le contour de la face supérieure de l'article et qui présente un orifice par l'intermédiaire duquel elle est reliée à un dispositif de dosage, lui-même relié à une source d'approvisionnement en produit, que ledit fond est muni de deux ensembles de buses verticales d'évacuation simultanée dudit produit et disposées de manière à coiffer entièrement l'article, que les buses du premier ensemble ou buses de décor supérieur sont réparties régulièrement sur toute la surface du fond et présentent un orifice inférieur de sortie cranté, que les buses du second ensemble ou buses de décor latéral, plus longues que celles du premier, sont disposées régulièrement le long de la périphérie du fond et présentent un orifice latéral orienté vers l'intérieur parallèlement au contour du fond, à l'exception des buses placées aux sommets du rectangle et dont l'orifice latéral est dans un plan perpendiculaire au plan de symétrie des deux côtés dont il forme l'intersection, et que ladite tête de nappage et le support de l'article sont mobiles en translation verticale l'un par rapport à l'autre en fin d'extrusion du produit.

2. Tête de nappage et de décoration selon la revendication 1, caractérisée par le fait qu'elle reste fixe, tandis que le support de l'article à revêtir et napper est mobile en translation verticale descendante.

3. Tête de nappage et de décoration selon l'une des revendications 1 et 2, caractérisée par le fait que les buses de décor latéral possèdent une ouverture latérale de sortie biseautée en forme de sifflet.

4. Tête de nappage et de décoration selon la revendication 3, caractérisée par le fait que les ouvertures latérales de sortie biseautée en forme de sifflet de deux buses successives ont des dimensions différentes.

5. Tête de nappage et de décoration selon l'une des revendications 1 et 2, caractérisée par le fait que les buses de décor supérieur sont de longueur croissante au fur et à mesure que l'on s'éloigne de la partie centrale vers la périphérie de la face supérieure de l'article.

6. Tête de nappage et de décoration selon l'une des revendications 1 et 2, caractérisée par le fait que les buses du second ensemble sont disposées le long du contour rectangulaire du fond et présentent un orifice latéral orienté vers l'intérieur parallèlement aux côtés du rectangle, à l'exception des buses placées aux quatre sommets dont l'orifice latéral est incliné à 45° sur chacun des deux côtés dont il forme l'intersection.

**Patentansprüche**

1. Düsenkopf zum gleichzeitigen Beschichten und Dekorieren der oberen Fläche und der Seitenflächen eines Feingebäckteils in Form eines Parallelepipeds mittels einer luftdurchsetzten Substanz mit semifluider Beschaffenheit, wobei die obere Fläche im wesentlichen einen rechteckigen Umriß besitzt, die Seitenschnitte des Feingebäckteils im wesentlichen trapezförmig sind und das Feingebäckteil auf einer einen Träger bildenden Platte angeordnet ist, dadurch gekennzeichnet, daß der Düsenkopf einen Vorratsbehälter für die besagte Substanz umfaßt, dessen Bodenseite die Form der oberen Fläche des Feingebäckteils besitzt und der eine Öffnung aufweist, vermittels derer er mit einer Dosiervorrichtung verbunden ist, die ihrerseits mit einer Vorratsquelle für die Substanz verbunden ist, daß die Bodenseite mit zwei Gruppen von vertikalen Düsen für ein gleichzeitiges Austreten der Substanz versehen ist, die so angeordnet sind, daß sie das Feingebäckteil vollständig überdecken, daß die Düsen der ersten Gruppe, d. h. die Düsen für die obere Verzierung, regelmäßig über die gesamte Oberfläche der Bodenseiten verteilt sind und eine untere gezackte bzw. gerippte Austritts-Öffnung aufweisen, daß die Düsen der zweiten Gruppe, d. h. die Düsen für die seitliche Verzierung, die länger sind als die Düsen der ersten Gruppe, in regelmäßiger Weise längs des Randes der Bodenseite angeordnet sind und eine seitliche Öffnung aufweisen, die parallel zur Umrißlinie des Bodens nach innen hin ausgerichtet ist, mit Ausnahme der an den Ecken des Rechtecks angeordneten Düsen, deren seitliche Öffnung sich in einer Ebene befindet, die senkrecht zur Symmetrie-Ebene der beiden Seiten verläuft, deren Schnittpunkt sie bildet, und daß der Düsenkopf und der Träger für das Feingebäckteil am Ende der Extrusion der Substanz in einer senkrechten Translationsbewegung gegeneinander beweglich sind.

2. Düsenkopf nach Anspruch 1, dadurch gekennzeichnet, daß er fest angeordnet ist, während der Träger für das zu überziehende und beschichtende Teil durch eine senkrechte, nach unten gerichtete Translationsbewegung beweglich ist.

3. Düsenkopf nach einem der Ansprüche 1 und 2, dadurch gekennzeichnet, daß die Düsen für die seitliche Verzierung eine seitliche Austrittsöffnung besitzen, die in Form einer Pfeife schräg abgeschnitten ist.

4. Düsenkopf nach Anspruch 3, dadurch gekennzeichnet, daß die seitlichen, in Form einer Pfeife schräg abgeschnittenen Austrittsöffnungen von zwei aufeinanderfolgenden Düsen unterschiedliche Abmessungen besitzen.

5. Düsenkopf nach einem der Ansprüche 1 oder 2, dadurch gekennzeichnet, daß die Düsen für die obere Verzierung eine Länge besitzen, die um so mehr anwächst, je mehr man sich vom Mittelteil zum Rand der oberen Fläche des Feingebäckteils hin entfernt.

6. Düsenkopf nach einem der Ansprüche 1 oder 2, dadurch gekennzeichnet, daß die Düsen der zweiten Gruppe längs der rechtwinkligen Umrißlinie der Bodenseite angeordnet sind und eine seitliche Öffnung aufweisen, die parallel zu den Seitenkanten des Rechtecks nach innen hin ausgerichtet ist, mit Ausnahme der Düsen, die an den vier Ecken angeordnet sind und deren seitliche Öffnung unter 45° zu jeder der beiden Seitenkanten geneigt ist, deren Schnittstelle sie bildet.

**Claims**

1. Apparatus for simultaneously coating and decorating with an aerated product of semifluid consistency the upper face and the lateral faces of an article of confectionery parallelepipedic in shape, the upper face of which is essentially rectangular and the lateral faces are essentially trapezoidal, said article being arranged on a platform serving as a support, said apparatus being characterized in that it comprises chamber for storing said aearated product the base of which slosely follows the contour of the upper face of the article and which has an opening through which it communicates with a metering unit which is itself connected to a source of supply of said aerated product, said base having two groups of vertical nozzles for simultaneously delivering said aerated product arranged for completely surrounding said article, that the nozzles of the first group or the upper decorating nozzles are distributed at regular intervals over the entire surface of the base and have a lower serrated outlet opening, that the nozzles of the second group or the lateral decorating nozzles which are longer than those of the first group are arranged at regular intervals along the periphery of the base and have a lateral opening directed inwards parallel to the contour of the base, except for nozzles situated at the tops of the rectangular base in which case the lateral opening is in a plane perpendicular to the plane of symetry of the two sides of which it forms the intersection, and that said apparatus and the support for the article are moveable vertically relative to one another on completion of dispensing of the product.

2. Apparatus as claimed in claim 1 characterized in that it is fixed and said support of the article to be coated and decorated is moveable vertically downwards.

3. Apparatus as claimed in claim 1 or 2, characterized in that the lateral outlet opening of each of said lateral decorating nozzles is bevelled in the form of a whistle.

4. Apparatus as claimed in claim 3, characterized in that the lateral outlet openings bevelled in the form of a whistle of each two successive lateral decorating nozzles have different dimensions.

5. Apparatus as claimed in claim 1 or 2 wherein the upper decorating nozzles have a length increasing from the central part to the periphery of the upper face of the article.

6. Apparatus as claimed in claim 1 or 2, characterized in that said nozzles of the second group are arranged along the rectangular contour of the base and have a lateral outlet opening directed inwards parallel to the sides of the rectangle except for nozzles situated at the four tops in which case the lateral opening is inclined at 45° to each of the two sides of which it forms the intersection.

FIG.1

0 040 349

FIG. 2

FIG. 4a          FIG. 4b

FIG.3